Europäisches Patentamt

European Patent Office

Office européen des brevets

(11) Publication number: **0 493 777 A2**

# EUROPEAN PATENT APPLICATION

(21) Application number: **91122120.8**

(22) Date of filing: **23.12.91**

(51) Int. Cl.⁵: **G01J 3/02**

(30) Priority: **30.12.90 JP 416957/90**

(43) Date of publication of application:
**08.07.92 Bulletin 92/28**

(84) Designated Contracting States:
**DE FR GB**

(71) Applicant: **HORIBA, LTD.**
**2 Miyanohigashi-machi Kissyoin**
**Minami-ku Kyoto(JP)**

(72) Inventor: **Ukon, Juichiro**
**3-10-6, Nishifukui**
**Ibaraki-city, Osaka(JP)**
Inventor: **Nakata, Yasushi**
**3-4-14, Shimamoto-cho, Hiroso**
**Mishima-gun, Osaka(JP)**

(74) Representative: **Patentanwälte TER MEER -**
**MÜLLER - STEINMEISTER & PARTNER**
**Mauerkircherstrasse 45**
**W-8000 München 80(DE)**

(54) **Microscopic spectrometer.**

(57) In order to confirm the position of a portion to be measured by spectrocopic measurement of a whole sample, in a microscopic spectrometer two optical paths (4a, 4b) are formed by a half mirror (12) detachably provided in the rear of an object lens (3). A second light source (13) for irradiating the sample (2) with beams through the mask is detachably provided in the rear of the mask and provides a focus of the object lens merely in one of said branched optical paths. A synthetic image of the whole image of the sample can be observed at the focus of the object lens (3) in the other branched optical path by coinciding the beams from the first light source (1 or 14) irradiating the whole sample with the beams and the image of the mask by beams from the second light source (13).

Fig.1

The invention relates to microscopic spectrometer in which a sample is irradiated with light from a light source and the light is reflected by a sample, or the light which has passed through the sample is spectrometrically measured through an object lens.

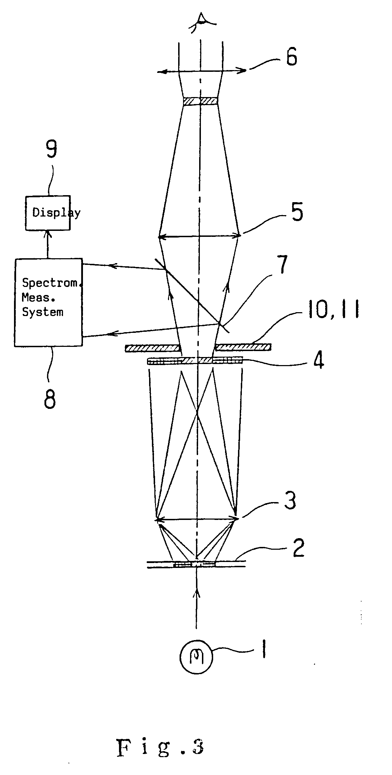

Fig. 3 of the accompanying drawings shows a conventional general microscopic spectrometer. A sample 2 is irradiated with light from a light source 1, and the light which has passed through the sample 2 is collected by an object lens 3 forming an enlarged image on an image surface 4. In addition, the light from the image surface 4 is focussed in an image plane through a relay lens 5 and the image surface 4 can be observed via an eyepiece 6.

In the case where a spectrometric measurement has to be carried out, an optical path-changing over mirror 7 is disposed between the image surface 4 and said relay lens to lead the light to a spectrometric measurement system 8 in order to obtain a spectrum by means of the spectrometric measuring system 8. An analysis can be made on a display device 9.

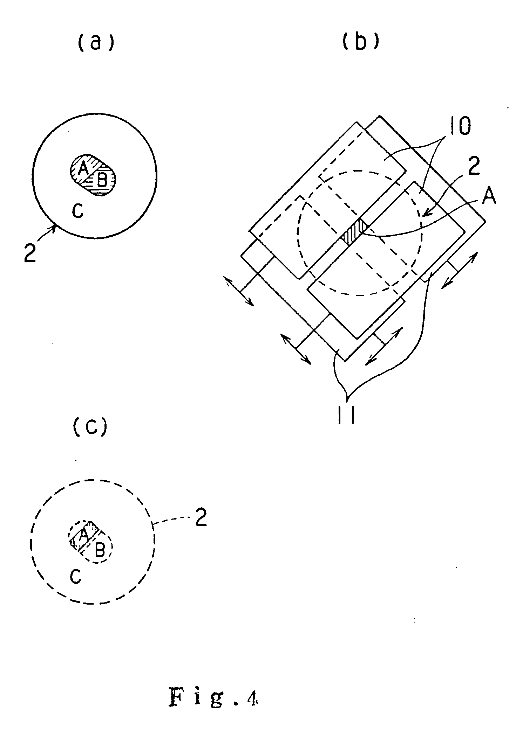

However, even in the case where it is desired to measure the spectrum of only a portion A of the sample 2, as shown for example in Fig. 4(a), the whole sample 2 becomes an object of the measurement so that merely a mixture spectrum of substances A, B, and C can be obtained. It is not possible to exclusively obtain the spectrum of the substance A which may be of specific interest for the observer.

In order to solve this problem, the image surface 4 may be provided with masks 10, 11 for shading beams other than those from the object to be measured with an aim to take merely the spectrum of the beams from the substance to be measured as shown in Fig. 3.

In this case, the image surface 4 is provided with said masks 10, 11 to form a rectangular slit of which respective sides are formed in the shape of knife-edges and of which the length may be optionally changed in order to shade-off the beams from the substances B, C, i.e. the beams other than those from the substance A to be measured. The slit length may be changed so that the beams from the substance A may be maximized. This kind of optimizing and maximizing the light beam yield from the substance A is indicated in Fig. 4(b).

However, if the object to be measured is limited by the above-described method, it is merely the substance A that can be observed through the masks 10, 11 as indicated in Fig. 4(c), and the other substances B, C are shaded, so that a positional relation of the substance A within the whole image of the sample 2 cannot be reconfirmed by visual observation. In other words, it is very difficult or impossible to grasp the positional relation of an object to be measured through the masks 10, 11, in particular if the object to be measured is very reduced in size or if the image as a whole of the substance is of complicated structure as, for example, in a semiconductor chip or in cellular tissues of a living body. However, just for those examples, it is very desirable and important to have a clear understanding at any time of the positional relation of a specific section or sector of the whole object.

For reconfirmation of the positional relation of the object to be measured, in the device of Fig. 3, the masks 10 and 11 must be removed at least once or said slit must be shifted. However, in order to measure again, it is remarkably difficult to reproduce the positions of the masks 10 and 11 and the slit length with high accuracy with the result that the accuracy of the measurement is tentatively reduced.

In view of the above-described problems with conventional microscopic spectrometers, it is an object of the present invention to provide a microscopic spectrometer of simple construction capable of easy confirmation of the position of portions or parts to be measured in a sample without the inherent problem of decreasing the accuracy of the measurement caused by removal or shifting of the shading masks.

A microscopic spectrometer according to the invention in which a sample is irradiated with light from a light source, and the light reflected by said sample or the light, which has passed through the sample, is spectrometrically measured through an object lens, is characterized according to the invention in that a half mirror is detachably provided in the rear of said object lens to form two branched optical paths, an appointed mask being provided nearly at a focus of the object lens in one branched optical path, and a second light source for irradiating the sample with light through said mask being detachably provided in the rear of the mask, so that a synthetic image of the sample by beams from said first light source and in image of the sample by beams from said second light source may be observed as a total image at a focus of the object lens in the other branched optical path.

With a microscopic spectrometer according to the invention, a portion to be measured as transmitted by and dimensionally limited by the masks, of said sample image focussed into an image at the focus of one of said branched optical paths coincides with the image of the mask on a sample surface by beams from the second light source, and the synthetic image of said total image of the sample by said beams from the first light source and the image of the mask on said sample surface by said beams from the second light source is focussed in an image plane at said focus of the other branched optical path. The advantageous result is that a positional relation of the portion to be measured of the whole sample becomes clear and defined without shifting the masks. Subsequently, the second light source and said half mirror are removed to let the beams passing through the mask from the portion to be measured introduced into a spectrometric measuring system to make the desired spectrometric measurement possible.

The invention, a preferred embodiment thereof and further advantageous details will be described in the following with reference to the accompanying drawings in which

Fig. 1    is a schematic drawing showing a construction in the case where the whole field of view of a sample is observed by a microscopic spectrometer according to the present invention;

Fig. 2    is a schematic drawing of a construction in the case where the spectrometric measurement is carried out by a microscopic spectrometer according to a preferred embodiment of the present invention;

Fig. 3    is a schematic drawing showing a construction of a conventional microscopic spectrometer already explained above; and

Fig. 4    is a plan view on samples (Fig. 4(a) and 4(c)) and on a mask arrangement (Fig. 4(b)) for shading by means of a mask portions other than a portion to be measured of a sample.

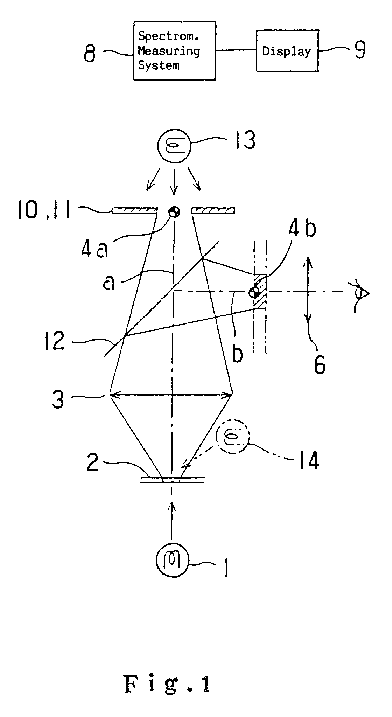

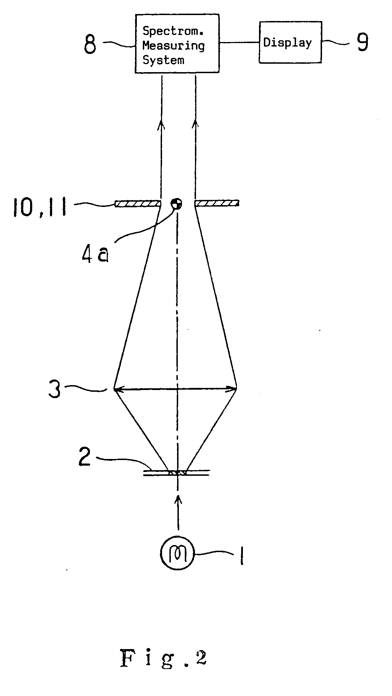

One preferred embodiment of a microscopic spectrometer according to the present invention will be described in the following with reference to Figs. 1 and 2 in which the same reference numerals are used as in Fig. 3 already described above, and indicating essentially the same parts and components unless otherwise described in the following.

A microscopic spectrometer according to the preferred embodiment is an apparatus for carrying out microscopic spectrometry of a sample 2 by a light transmission method. Said apparatus comprises a first light source 1 arranged in front of the sample 2 for irradiating said sample 2 with light (here with visible light). An object lens 3 is arranged in the rear of the sample 2 for collecting beams which have been passed through the sample 2 or beams which were excited by incident light, such as fluorescence and phosphorescence, to focus an enlarged image of the sample 2 in an image plane. A half mirror 12 is detachably arranged in the rear of said object lens 3, and an optical path on the downstream side of said half mirror 12 is branched into two branched optical paths a and b.

Masks 10, 11 formed of, for example a rectangular slit, are arranged at focusses of the object lens 3 in said one optical path a (refer to Fig. 4(b) and 4(c), respectively), and said masks 10, 11 are provided with sides or edges formed in the shape of a knife edge of which the slit length and width can be optionally change for shading beams other than those from a portion to be measured of the sample 2. In addition, also a circular pinhole may be used as shading means.

An eyepiece 6 is arranged in said other optical path b branched by and from said half mirror 12 so that a focus 4b of the object lens 3 may be a focal point.

A second light source 13 is detachably arranged in the rear of the masks 10, 11 in the optical path a for irradiating the sample 2 with light (visible light) through said masks 10, 11.

A spectrometric measuring system 8 is arranged in the rear of said light source 13 for picking up the beams transmitting or passing through the masks 10, 11 from the sample 2. As in the conventional system, a display device 9 serves for observation purposes.

The operation of a spectrometric measurement by a microscopic spectrometer of the above construction will be described below.

At first, the whole observation of the sample 2 is conducted in the following manner under the condition that both the half mirror 12 and the second light source 13 are arranged on the optical path.

The whole field of view of the sample 2 is irradiated with the beams from the first light source 1 to focus an image of the whole field of view of the sample 2 on an image plane at the said focusses 4a, 4b in the respective branched optical paths a and b.

The transmission of the beams focussing said image of the whole field of view at the focus 4a is restricted by the masks 10, 11, and thus merely the beams from the portion to be measured of the sample 2 are passing through the masks 10, 11.

Since positions of the masks 10, 11 relative to the object lens 3 are conjugate points of the sample surface, the beams incidenting upon the masks 10, 11 from the second light source pass through the half mirror 12 to focus an image of said slit of the masks 10, 11 into an image on said sample surface. Said images of the slits of the masks 10, 11 are put or are shifted upon the portions to be measured of the sample 2.

Also the images of the slit focussed on an image plane on the sample surface are enlarged by the object lens 3 and are reflected by the half mirror 12 to be focussed to an image at the focus 4b in the optical path b, similar to the image of the whole field of view. Accordingly, a synthetic image of the enlarged image of the whole field of view of the sample 2 by the beams from the first light source and the images of the slit of the masks 10 and 11 by the beams from the second light source 13 is focussed to an image at the focus 4b in the optical path b. As described above, since the images of the slit are placed upon the portion to be measured of the sample 2, the synthetic image simultaneously indicates the whole field of view and the portion to be measured of the sample 2 in a discriminated form. Accordingly, the observer can readily confirm the position of the portion to be measured in the whole field of view in the sample 2 by observing this synthetic image through the eyepiece 6.

Following this, the proper spectrometric measurement becomes possible by removing the half mirror 12 and the second light source 13 from the respective optical paths after confirming the position of the portion to be measured of the sample 2. That is to say, since the optical path b is removed, and thus also the light source 13 does not exist during this measuring condition, as shown by Fig. 2, the beams focussing the enlarged image of the sample 2 to an image, merely the beams which are not restricted by the masks 10, 11 from the portion to be measured, are introducing into the spectrometric measuring system 8 to be spectrometrically measured by a spectrometer. The measurement results can be observed via the display device 9.

Although the case of a transmission-type microscopic spectrometer has been described above, the idea of the present invention can similarly be applied also to the case of the reflection-type microscopic spectrometer where beams from a light source 14 are reflected by the sample surface to conduct a spectrometric measurement as indicated by imaginary line for a light source 14 in Fig. 1.

In addition, although the case of a microscopic visible spectrometer was described above as a preferred embodiment, also a light source emitting infrared rays and ultraviolett rays and visible light at the same time can be used either as light source 1 or as light source 14. Also, those light sources may be replaced by an infrared light source or an ultraviolett light source only in the case of infrared or ultraviolett spectrometric measurement.

With the present invention, the above described object to confirm the position of a portion to be measured in a complete sample without shifting one or several masks has been primarily achieved with the invention as described above by making use of two branched optical paths being formed by a half mirror detachably provided in the rear of the object lens of the system. A second light source for irradiating the sample with light beams through the mask is detachably provided in the rear of the mask provided at the focus of the object lens but only in one of said branched optical paths. A synthetic image of the whole image of the sample by the beams from the first light source irradiating the whole sample combined with the beams of the image of the mask caused by beams from the second light source to be observed at the focus of the object lens in the other of said branched optical paths, it becomes possible to easily confirm the position of a portion to be measured in the whole sample without any shifting of the masks. The construction of the whole system is comparatively simple.

**Claims**

1. A microscopic spectrometer, in which a sample (2) is irradiated with light from a light source (1 or 14) and the light reflected by said sample (2) or the light which has passed through the sample (3), is spectrometrically measured through an object lens (3), **characterized in that** for confirming a positional relationship at said sample or of a portion thereof to be spectrometrically measured, a half mirror (12) is detachably provided in the rear of said object lens (3) to form two branched optical paths (a,b), an appointed mask (10, 11) being provided merely at a focus (4a) of the object lens (3) in one branches optical path (a), and a second light source (13) for irradiating the sample (2) with light through said mask (10, 11) being detachably provided in the rear of the mask (10, 11), so that a synthetic image of the sample (2) by beams from said first light source (1) and an image of the mask (10, 11) by beams from said second light source (13) maybe observed as a total image at a focus (4b) of said object lens (3) in the other branched optical path (b).

Spectrom.
Measuring
System

8

Display

9

13

10,11

4a

4b

a

12

b

6

3

2

14

1

Fig.1

Fig.2

Fig.3

(a)

(b)

(c)

Fig.4